# EUROPÄISCHE PATENTSCHRIFT

(11) **EP 3 341 268 B1**
(45) Veröffentlichungstag und Bekanntmachung des Hinweises auf die Patenterteilung: **05.06.2019**
(21) Anmeldenummer: 16751302.7
(22) Anmeldetag: 15.08.2016
(51) Int. Cl.: B62D 25/06, B62D 29/00, B60J 7/02

(54) **VERSTÄRKUNGSRAHMEN, DACHELEMENT**
REINFORCING FRAME, ROOF ELEMENT
CADRE DE RENFORT, ÉLÉMENT DE TOIT

(30) Priorität: 27.08.2015 DE 102015216381
(43) Veröffentlichungstag der Anmeldung: 04.07.2018
(73) Patentinhaber: Volkswagen Aktiengesellschaft, 38440 Wolfsburg (DE)
(72) Erfinder: MENGER, Ralf, 38126 Braunschweig (DE); DZYUBA, Egor, 300163 Hannover (DE)
(86) Internationale Anmeldenummer: PCT/EP2016/069351
(87) Internationale Veröffentlichungsnummer: WO 2017/032633

(56) Entgegenhaltungen:
- WO-A1-2007/038912
- DE-A1-102008 051 997
- DE-A1-102010 031 774
- DE-U1- 20 016 610
- GB-A- 730 127

## Beschreibung

Die Erfindung betrifft einen Verstärkungsrahmen, insbesondere für eine Dachöffnung eines Fahrzeugs, mit einem - insbesondere geschlossenen - Rahmenbauteil, das eine Öffnung einschließt und als Verbundbauteil ausgebildet ist.

Weiterhin betrifft die Erfindung ein Dachelement für ein Fahrzeug, mit einer Dachöffnung für ein Fenster, Schiebedach, Hebedach oder Schiebe-Hebe-Dach, wobei der Dachöffnung ein Verstärkungsrahmen mit einer mit der Dachöffnung korrespondierenden Öffnung zugeordnet ist.

Verstärkungsrahmen und Dachelemente der eingangs genannten Art sind aus dem Stand der Technik bekannt. So offenbart beispielsweise die Offenlegungsschrift DE 10 2006 046 122 A1 einen Rahmen für beispielsweise ein Fahrzeug-Schiebedach, der ein einstückiges Rahmenbauteil aufweist, das zur Ausbildung eines leichten und steifen Rahmens als Verbundbauteil ausgeführt ist. Dazu weist das Verbundbauteil einen Schichtaufbau aus einem Basisträger aus Kunststoff und einem Einlegeteil aus einem Metall, insbesondere ein dünnwanndiges Blech, auf.

Aus der Offenlegungsschrift DE 10 2013 006 131 A1 ist weiterhin ein Verstärkungsrahmen für ein Fahrzeug bekannt, der aus einem Organoblech gefertigt ist und insofern aus einem faserverstärkten Halbzeug mit thermoplastischer Matrix besteht. Weiterer Stand der Technik ist beispielsweise aus den Dokumenten DE 101 63 822 B4, DE 10 2005 047 390 A1, DE 10 2011 120 903 A1 und DE 10 2013 105 080 A1 bekannt.

Aus der Offenlegungsschrift WO 2007/038912 A1 ist außerdem bereits ein Trägerrahmen für Dachsysteme im Kraftfahrzeugbereich bekannt, der zwei Längselemente und zwei Querelemente aufweist, die in ersten Abschnitten aus einem ersten Werkstoff mit einer hohen Festigkeit, in zweiten Abschnitten aus einem zweiten Werkstoff mit einer niedrigeren Festigkeit und in dritten Abschnitten aus dem ersten und dem zweiten Werkstoff gebildet sind. Außerdem ist es aus der Offenlegungsschrift DE 10 2008 051 997 A1 bekannt, ein Dachrahmenelement in Hybridbauweise vorzusehen, das aus einem ersten metallischen Formteil und einem zweiten metallischen Formteil gefertigt ist, zwischen denen ein Verstärkungselement aus Kunststoff liegt. Weiterhin ist es aus der Offenlegungsschrift GB 730127 A1 bekannt, ein Isolationselement vorzusehen, das einen Schichtaufbau aus zwei Metallblechen, zwischen denen ein Teppich aus Glasfasern angeordnet ist, aufweist.

Im Fahrzeugbau kommt dem Gewicht einzelner Bauteile aufgrund zu erzielender Kraftstoffverbrauchswerte eine hohe Bedeutung zu. Der Erfindung liegt daher die Aufgabe zugrunde, einen Verstärkungsrahmen zu schaffen, der bei zumindest gleichbleibender Belastbarkeit und Festigkeit, insbesondere Biegesteifigkeit, ein geringeres Gewicht als bisher bekannte Verstärkungsrahmen aufweist.

Die der Erfindung zugrundeliegende Aufgabe wird durch einen Verstärkungsrahmen mit den Merkmalen des Anspruchs 1 gelöst. Dieser hat den Vorteil, dass aufgrund eines besonderen Schichtaufbaus eine hohe Steifigkeit des Verstärkungsrahmens gewährleistet ist, wobei aufgrund der gewählten Materialien des Schichtaufbaus das Gewicht beispielsweise im Vergleich zu vorbekannten Metallrahmen niedriger ausfällt. Erfindungsgemäß ist dabei vorgesehen, dass das Rahmenbauteil einen Schichtaufbau aus zwei Metallrahmenblechen, zwischen denen ein Kunststoffrahmenteil liegt, aufweist. Das als Verbundbauteil ausgebildete Rahmenbauteil der Erfindung unterscheidet sich somit von vorbekannten Verbund-Rahmenbauteilen dadurch, dass als Einlegeteil ein leichtes Kunststoffrahmenteil vorgesehen ist, das von zwei insbesondere dünnen Metallrahmenblechen umgeben ist. Dieser Schichtaufbau führt aufgrund des Kunststoffkerns beziehungsweise Kunststoffrahmenteils zu einem insgesamt niedrigen Gewicht des Verstärkungsrahmens, wobei die Verbindung aus Metallrahmenblechen und Kunststoffrahmenteil eine hohe Steifigkeit des Verstärkungsrahmens und damit eine hohe Belastbarkeit und Festigkeit gewährleistet.

Gemäß einer bevorzugten Weiterbildung der Erfindung ist vorgesehen, dass die Metallrahmenbleche als Stahlrahmenbleche ausgebildet sind. Diese sind vorteilhafterweise kostengünstig herstellbar. Das Rahmenbauteil kann dabei sowohl flach beziehungsweise eben oder auch dreidimensional konturiert gefertigt sein. Insbesondere kann das Rahmenbauteil durch einen Biegeprozess in eine gewünschte Form gebracht werden.

Gemäß einer bevorzugten Weiterbildung der Erfindung ist vorgesehen, dass das Kunststoffrahmenteil als Polymerrahmenteil ausgebildet ist. Dadurch lässt sich auch das Kunststoffrahmenteil einfach und kostengünstig realisieren. Insbesondere ist vorgesehen, dass das Kunststoffrahmenteil als Polymerfolie ausgebildet ist, die zwischen den Stahlrahmenblechen liegt. Aufgrund des Schichtaufbaus liegen die zwei Metallrahmenbleche jeweils an dem Kunststoffrahmenteil an.

Weiterhin ist bevorzugt vorgesehen, dass die Metallrahmenbleche eine Höhe von 0,1 mm bis 0,4 mm, insbesondere von 0,2 mm bis 0,3 mm aufweisen. Damit weisen die Metallbeziehungsweise Stahlrahmenbleche eine ausreichende Dicke zur Gewährleistung der gewünschten Belastbarkeit und Stabilität des Verstärkungsrahmens auf und sind vorteilhafterweise dennoch derart dünn ausgebildet, dass sich der Bauraumbedarf im Vergleich zu bekannten Lösungen nicht oder kaum verändert. Bevorzugt weisen die Stahlrahmenbleche jeweils die gleiche Höhe auf. Alternativ können die Stahlrahmenbleche jedoch auch unterschiedliche Höhen beziehungsweise Dicken aufweisen.

Gemäß einer bevorzugten Weiterbildung der Erfindung ist vorgesehen, dass das Kunststoffrahmenteil eine Höhe von mindestens 0,2 mm, insbesondere von mindestens 0,3 mm aufweist. Hierdurch ergibt sich insgesamt eine flache Konstruktion des Rahmenbauteils mit vorteilhafter Steifigkeit.

Besonders bevorzugt ist vorgesehen, dass die Stahlbleche jeweils 0,2 mm hoch sind und das Kunststoffrahmenteil 0,4 mm hoch. Damit weist das Kunststoffrahmenteil in dem Schichtaufbau eine im Vergleich zu den Stahlblechen jeweils doppelt so große Dicke auf, wodurch die Metallbeziehungsweise Stahlrahmenbleche zusammen den gleichen Höhenanteil des Rahmenbauteils erbringen wie das Kunststoffbauteil. Bei einer derartigen Wahl der Höhen beziehungsweise Dicken der einzelnen Schichten zeigt sich eine besonders vorteilhafte Belastbarkeit und Stabilität des Verstärkungsrahmens bei einer vorteilhaften Gewichtsreduzierung. Selbstverständlich können grundsätzlich jedoch auch andere Höhenverhältnisse gewählt werden.

Gemäß einer bevorzugten Weiterbildung der Erfindung ist vorgesehen, dass die Metallrahmenbelche schubfest mit dem Kunststoffrahmenteil verbunden sind. Durch die schubfeste Verbindung wird die Steifigkeit des Verstärkungsrahmen auf einfache konstruktive Art und Weise erhöht. Insbesondere ist vorgesehen, dass die Metallrahmenbleche mit dem Kunststoffrahmenteil jeweils zur schubfesten Verbindung verklebt sind. Dadurch wird eine einfache Montage und Herstellung des Verstärkungsrahmens gewährleistet, wobei durch das Verkleben der einzelnen Schichten miteinander die Stabilität des Verstärkungsrahmens weiter erhöht wird.

Erfindungsgemäß ist vorgesehen, dass das Rahmenbauteil zwei zumindest im Wesentlichen parallel und beabstandet zueinander verlaufende Längsholme und zwei zumindest im Wesentlichen parallel und beabstandet zueinander verlaufende Querholme aufweist, die zusammen die Öffnung einschließen. Die Längsholme und Querholme bilden somit zusammen eine ringförmige Kontur beziehungsweise einen ringförmigen Rahmen, der die Öffnung einschließt. Durch die einfache Ausbildung mit zwei Längsholmen und zwei Querholmen wird eine steife Struktur gewährleistet, die darüber hinaus den Vorteil bietet, dass beispielsweise auch herkömmliche Dachfenster in der Öffnung aufgenommen werden können.

Erfindungsgemäß ist vorgesehen, dass die benachbarten Querholme und Längsholme jeweils separat ausgebildet und aneinander befestigt sind. Damit können die Querholme und Längsholme separat gefertigt werden, wodurch der Herstellungsprozess vereinfacht wird. Die Querholme und Längsholme werden an ihren benachbarten Enden direkt oder mittels geeigneter Endverbindungsstücke miteinander verbunden beziehungsweise aneinander befestigt, um den Verstärkungsrahmen zu bilden. Dabei werden geeignete Fügeverfahren genutzt, die beispielsweise formschlüssig, reibschlüssig und/oder stoffschlüssig die Verbindung der Holme miteinander dauerhaft gewährleisten.

Erfindungsgemäß ist bei einer Alternative der Erfindung vorgesehen, dass nur die Längsholme den zuvor beschriebenen Schichtaufbau aufweisen. Damit können die Querholme beispielsweise auf herkömmliche Art und Weise gefertigt werden, wodurch insgesamt der Herstellungsaufwand und damit auch die Herstellungskosten reduziert werden. Hierdurch wird erreicht, dass das technisch verhältnismäßig aufwendige Verbinden von zwei Holmen miteinander, die den Schichtaufbau aufweisen, vermieden wird, wobei jedoch aufgrund der im Vergleich zu den Querholmen größeren Länge der Längsholme der größte Teil der Gewichtsvorteile des Schichtaufbaus gegenüber einem herkömmlichen Aufbau der Holme erreicht wird.

Bevorzugt sind die Querholme, wenn sie konventionell gefertigt sind, aus Stahlblech gefertigt. Damit sind sie schwerer im Vergleich zu einer Ausbildung der Querholme aus dem genannten Schichtaufbau, jedoch ergeben sich dadurch Vorteile bezüglich der einfacheren Herstellung und bezüglich einer einfacheren Verbindung zu den durch den Schichtaufbau gefertigten Längsholmen.

Alternativ ist erfindungsgemäß vorgesehen, dass nur die Querholme den Schichtaufbau aufweisen. Dies kann beispielsweise dann von Vorteil sein, wenn die Längsholme in ihrer herkömmlichen Fertigungsweise, insbesondere als Stahlblechelemente, damit einfacher in den Karosserieverbund des Kraftfahrzeugs eingesetzt werden können oder bestimmte Stabilitätsanforderungen erfüllen müssen.

Ferner alternativ ist erfindungsgemäß vorgesehen, dass sowohl die Querholme als auch die Längsholme den Schichtaufbau aufweisen beziehungsweise aus diesem gefertigt sind. Es ergeben sich dadurch die bereits genannten Vorteile. Der Unterschied zu einer einstückigen Ausbildung liegt dabei darin, dass benachbarte Querholme und Längsholme direkt oder mittels geeigneter Verbindungsstücke miteinander verbunden beziehungsweise aneinander befestigt sind. Hierdurch wird zwar der zusätzliche Schritt des Verbindens notwendig, jedoch können die einzelnen Holme separat und damit einfacher und kostengünstiger hergestellt werden. Insbesondere ist es dabei möglich, die Querholme und die Längsholme jeweils als Gleichteile auszubilden, um den Fertigungsaufwand und die Fertigungskosten weiter zu reduzieren.

Das erfindungsgemäße Dachelement mit den Merkmalen des Anspruchs 9 mit einem Verstärkungsrahmen zeichnet sich dadurch aus, dass der Verstärkungsrahmen erfindungsgemäß ausgebildet ist. Es ergeben sich hierdurch die bereits genannten Vorteile. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: ein Dachelement mit einem Verstärkungsrahmen in einer Draufsicht,
- Figur 2: den Verstärkungsrahmen in einer Draufsicht und
- Figur 3: eine Querschnittsdarstellung des Verstärkungsrahmens.

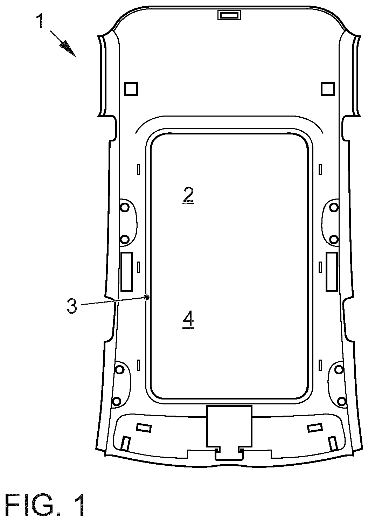

Figur 1 zeigt in einer vereinfachten Darstellung in einer Draufsicht ein Dachelement 1 für ein Fahrzeug, wobei das Dachelement 1 als Formhimmel ausgebildet ist und eine Dachöffnung 2 aufweist, die insbesondere zur Aufnahme eines Fensterglases, eines Schiebedachs, eines Hebedachs oder eines Schiebehebedachs ausgebildet ist. Der Dachöffnung 2 ist ein Verstärkungsrahmen 3 zugeordnet, der an dem Dachelement 1 festgemacht ist und die Dachöffnung 2 umgibt. Dazu weist der Verstärkungsrahmen 3 selbst eine Öffnung 4 auf, die mit der Dachöffnung 2 korrespondiert. Der Verstärkungsrahmen 3 ist insofern als geschlossener Rahmen ausgebildet, der die Dachöffnung 2 vollständig umgibt.

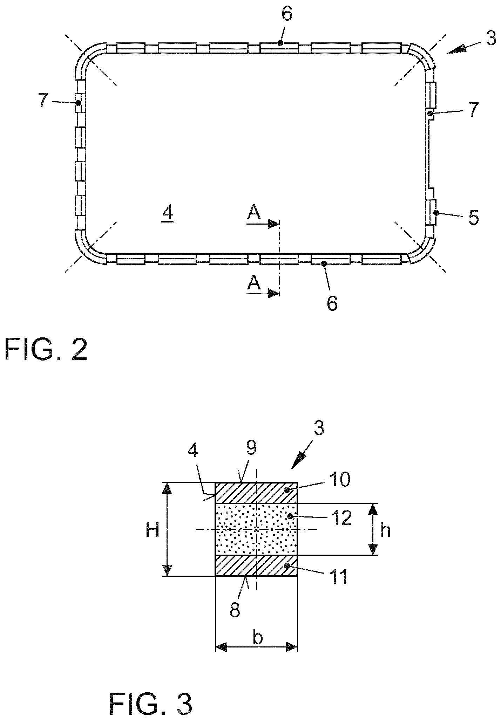

Figur 2 zeigt den Verstärkungsrahmen 3 in einer beispielhaften Draufsicht. Der Verstärkungsrahmen 3 weist in der Draufsicht von Figur 2 gesehen eine im Wesentliche rechteckförmige Kontur mit abgerundeten Ecken auf. Der Verstärkungsrahmen 3 ist aus einem Rahmenbauteil 5 gebildet, das zwei parallel zueinander verlaufende Längsholme 6 sowie zwei parallel zueinander verlaufende Querholme 7 aufweist, die jeweils einander gegenüberliegend und beabstandet zueinander angeordnet sind, sodass das Rahmenbauteil 5 insgesamt eine ringförmig geschlossene Kontur aufweist, wobei die benachbarten Querholme 7 und Längsholme 6 einstückig miteinander ausgebildet sind.

Figur 3 zeigt einen Querschnitt durch den Verstärkungsrahmen 3 entlang der Linie A-A aus Figur 2. Das Rahmenbauteil 5 weist, wie in Figur 3 gezeigt, eine Höhe H sowie eine Breite b auf. Gemäß dem in Figur 3 gezeigten Ausführungsbeispiel entsprechen Höhe H und Breite b einander. Selbstverständlich können jedoch auch die Höhe H und die Breite b unterschiedlich sein, sodass sich ein von einem Quadrat abweichender Querschnitt des Rahmenbauteils 5 ergibt. Das Rahmenbauteil 5 weist eine dem Dachelement 1 zugewandte Unterseite 8 sowie eine von dem Dachelement 1 abgewandte Oberseite 9 auf, wobei der Abstand von Oberseite 9 und Unterseite 8 der Höhe H entspricht beziehungsweise diese definiert.

Wie aus Figur 3 ersichtlich ist das Rahmenbauteil 5 als Verbundbauteil ausgebildet, wozu es einen Schichtbau aus drei Schichten umfasst. Die die Oberseite 9 und die Unterseite 8 bildenden außenliegenden Schichten sind dabei jeweils als Stahlrahmenblech 10 beziehungsweise 11 ausgebildet. Die zwischen den Stahlrahmenblechen 10 liegende mittlere Schicht wird von einem Polymerrahmenteil 12 gebildet. In einer Draufsicht gesehen weisen die Stahlrahmenbleche 10, 11 und das Polymerrahmenteil 12 die in Figur 2 gezeigte Kontur des Verstärkungsrahmens 3 auf. In der Querschnittsdarstellung liegen die Schichten 11, 12, 10 übereinander.

Durch den Schichtaufbau liegen die Stahlrahmenbleche 10, 11 jeweils an einer Seite des Polymerrahmenteils 12 an. Vorliegend sind die Stahlrahmenbleche 10, 11 dabei jeweils mit dem Polymerrahmenteil 12 verklebt, sodass eine schubfeste Verbindung zwischen den Stahlrahmenblechen 11, 10 und dem Polymerrahmenteil 12 vorliegt. Hierdurch ergibt sich ein Verstärkungsrahmen 3, der eine hohe Biegesteifigkeit bei geringem Gewicht aufweist. Dabei ist vorliegend vorgesehen, dass das Polymerrahmenteil 12 eine Höhe H von 0,4 mm aufweist, während die Stahlrahmenbelche 10, 11 jeweils eine Höhe von 0,2 mm aufweisen, sodass sich die Gesamthöhe H zu H=0,8 mm ergibt.

Bei vergleichbaren Eigenschaften bezüglich der Biegesteifigkeit können mit der vorliegenden Ausführungsform 15% des Gewichts eines Verstärkungsrahmens aus Aluminium eingespart werden, gegenüber einer reinen Stahl-Ausführungsform können sogar 35% bis 50% Gewicht eingespart werden.

Das Polymerrahmenteil ist bevorzugt aus Polyethylen und Polyamid gefertigt, sodass sich ein bevorzugtes E-Modul von etwa 1000 N/mm² ergibt. Die Stahlrahmenbleche 10, 11 weisen bei Stahlgüten bis DP500 ein E-Modul von etwa 210 000 N/mm² auf. Bei einer angenommenen und bevorzugten Breite b von 20 mm, einer Höhe H von 1,6 mm und einer Höhe h von 1 mm ergibt sich eine Biegesteifigkeit des Verstärkungsrahmens 3 von B=E * I, wobei E dem E-Modul und I dem Flächenträgheitsmoment zweiten Grades entspricht, zu B=1,09 * 10⁶ N/mm². Im Vergleich zu einem Verstärkungsrahmen aus Vollmaterial mit ähnlichen Abmaßen ergibt sich daraus eine vorteilhafte Biegesteifigkeit für den vorliegenden Verstärkungsrahmen mit dem Mehrschichtaufbau.

Während das vorstehend beschriebene Beispiel die Ausbildung des Rahmenbauteils 5 als einstückiges Bauteil zeigt, bei welchem die Querholme 7 und Längsholme 6 einstückig miteinander verbunden sind beziehungsweise endseitig ineinander übergehen, ist gemäß einem Ausführungsbeispiel der Erfindung vorgesehen, dass die Längsholme 6 und Querholme 7 als separate Bauteile ausgebildet und an ihren benachbarten Enden direkt oder mittels geeigneter Endverbindungsstücke miteinander verbunden beziehungsweise aneinander befestigt sind.

Figur 2 zeigt hierzu gestrichelte Trennlinien, welche eine beispielhafte Aufteilung des Rahmenbauteils 5 in die separaten Holme zeigen, welche bei diesem Beispiel direkt (d. h. ohne Zwischenschaltung von Verbindungsstücken) miteinander verbunden sind . Die gewählten Trennstellen sind rein beispielhaft zu verstehen, natürlich können die Trennstellen auch anders ausgerichtet und/oder angeordnet sein.

Die separate Ausbildung der Querholme 7 und Längsholme 6 hat den Vorteil, dass die Querholme 7 und Längsholme 6 nicht gleich ausgebildet sein müssen beziehungsweise nicht den zuvor beschriebenen Schichtaufbau aufweisen müssen. Insbesondere ist gemäß einem weiteren Ausführungsbeispiel der Erfindung vorgesehen, dass die Längsholme 6 den Schichtaufbau aufweisen, während die Querholme 7 auf herkömmliche Art und Weise, insbesondere als Stahlblechelemente, gefertigt sind. Hierdurch ergibt sich der Vorteil, dass die Längsholme 6 mit dem Schichtaufbau einfacher mit den Querholmen 7 aus Stahlblechelementen verbunden werden können. Das Verbinden von zwei separaten Holmen, die den zuvor beschriebenen Schichtaufbau aufweisen, ist im Vergleich dazu technisch aufwendiger und damit kostenintensiver. Weil die Längsholme 6 den größten Teil des Rahmenbauteils 5 ausmachen, bietet bei der separaten Herstellung die Fertigung der Längsholme 6 aus dem Schichtaufbau den größeren Vorteil in Bezug auf die Gewichtsreduzierung, sodass auch dann, wenn die Querholme 7 noch aus herkömmlichen Stahlblechelementen gefertigt sind, das Rahmenbauteil 5 insgesamt leichter ist als der herkömmliche Verstärkungsrahmen 3. Alternativ wäre es auch denkbar, nur die Querholme 7 mit dem beschriebenen Schichtaufbau auszubilden.

Der Verstärkungsrahmen 3 kann beispielsweise an das Dachelement 1 angeklebt und/oder in dieses eingepresst sein.

## Patentansprüche

1. Verstärkungsrahmen (3), insbesondere für eine Dachöffnung (2) eines Fahrzeugs, mit einem insbesondere geschlossenen Rahmenbauteil (5), das eine Öffnung (4) einschließt und als Verbundbauteil ausgebildet ist, **dadurch gekennzeichnet, dass** das Rahmenbauteil (5) einen Schichtaufbau aus zwei Metallrahmenblechen (10,11), zwischen denen ein Kunststoffrahmenteil (12) liegt, aufweist, wobei das Rahmenbauteil (5) zwei zumindest im Wesentlichen parallel und beabstandet zueinander verlaufende Längsholme (6) und zwei zumindest im Wesentlichen parallel und beabstandet zueinander verlaufende Querholme (7) aufweist, die zusammen die Öffnung (4) einschließen, und wobei die benachbarten Querholme (7) und Längsholme (6) jeweils separat ausgebildet und direkt oder mittels geeigneter Verbindungsstücke aneinander befestigt sind, und wobei nur die Längsholme (6) oder nur die Querholme (7) oder die Querholme (7) und die Längsholme (6) den Schichtaufbau aufweisen.

2. Verstärkungsrahmen nach dem vorhergehenden Anspruch, **dadurch gekennzeichnet, dass** die Metallrahmenbleche (10,11) als Stahlrahmenbleche ausgebildet sind.

3. Verstärkungsrahmen nach einem der vorhergehenden Ansprüche, **dadurch gekennzeichnet, dass** das Kunststoffrahmenteil (12) als Polymerrahmenbauteil ausgebildet ist.

4. Verstärkungsrahmen nach einem der vorhergehenden Ansprüche, **dadurch gekennzeichnet, dass** die Metallrahmenbleche (10,11) eine Höhe von 0,1 mm bis 0,4 mm, insbesondere von 0,2 mm bis 0,3 mm aufweisen.

5. Verstärkungsrahmen nach einem der vorhergehenden Ansprüche, **dadurch gekennzeichnet, dass** das Kunststoffrahmenteil (12) eine Höhe von mindestens 0,2 mm, insbesondere von mindestens 0,3 mm aufweist.

6. Verstärkungsrahmen nach Anspruch 4 und Anspruch 5, **dadurch gekennzeichnet, dass** die Metallrahmenbleche (10,11) eine Höhe von 0,2 mm und das Kunststoffbauteil eine Höhe von 0,4 mm aufweist.

7. Verstärkungsrahmen nach einem der vorhergehenden Ansprüche, **dadurch gekennzeichnet, dass** die Metallrahmenbleche (10,11) schubsteif mit dem Kunststoffrahmenteil (12) verbunden, insbesondere verklebt, sind.

8. Verstärkungsrahmen nach Anspruch 1, **dadurch gekennzeichnet, dass** für den Fall, das nur die Längsholme (6) den Schichtbau aufweisen, die Querholme (7) aus Stahlblech gefertigt sind.

9. Dachelement (1) für ein Fahrzeug, mit einer Dachöffnung (2) für ein Fenster, Schiebedach, Hebedach oder Schiebe-Hebe-Dach, wobei der Dachöffnung (2) ein Verstärkungsrahmen (3) zugeordnet ist, **gekennzeichnet durch** die Ausbildung des Verstärkungsrahmens (3) nach einem der Ansprüche 1 bis 8.

## Claims

1. Reinforcing frame (3), in particular for a roof opening (2) of a vehicle, with an in particular closed frame component (5) which encloses an opening (4) and is designed as a composite component, **characterized in that** the frame component (5) has a layer structure consisting of two metal frame sheets (10, 11), between which a plastics frame part (12) lies, wherein the frame component (5) has two longitudinal struts (6) running at least substantially parallel and at a distance to each other and two transverse struts (7) running at least substantially parallel and at a distance to each other, said struts together enclosing the opening (4), and wherein the adjacent transverse struts (7) and longitudinal struts (6) are each formed separately and are fastened to one another directly or by means of suitable connecting pieces, and wherein only the longitudinal struts (6) or only the transverse struts (7) or the transverse struts (7) and the longitudinal struts (6) have the layer structure.

2. Reinforcing frame according to the preceding claim, **characterized in that** the metal frame sheets (10, 11) are in the form of steel frame sheets.

3. Reinforcing frame according to either of the preceding claims, **characterized in that** the plastics frame part (12) is in the form of a polymer frame component.

4. Reinforcing frame according to one of the preceding claims, **characterized in that** the metal frame sheets (10, 11) have a height of 0.1 mm to 0.4 mm, in particular of 0.2 mm to 0.3 mm.

5. Reinforcing frame according to one of the preceding claims, **characterized in that** the plastics frame part (12) has a height of at least 0.2 mm, in particular of at least 0.3 mm.

6. Reinforcing frame according to Claim 4 and Claim 5, **characterized in that** the metal frame sheets (10, 11) have a height of 0.2 mm and the plastics component has a height of 0.4 mm.

7. Reinforcing frame according to one of the preceding claims, **characterized in that** the metal frame sheets (10, 11) are connected, in particular adhesively bonded, to the plastics frame part (12) in a shear-resistant manner.

8. Reinforcing frame according to Claim 1, **characterized in that** in the event that only the longitudinal struts (6) have the layer structure, the transverse struts (7) are manufactured from steel sheet.

9. Roof element (1) for a vehicle, with a roof opening (2) for a window, sliding roof, tilting roof or sliding/tilting roof, wherein the roof opening (2) is assigned a reinforcing frame (3), **characterized by** the design of the reinforcing frame (3) according to one of Claims 1 to 8.

## Revendications

1. Cadre de renfort (3), en particulier pour une ouverture de toit (2) d'un véhicule, comprenant un composant de cadre (5) en particulier fermé qui entoure une ouverture (4) et est réalisé sous forme de composant composite, **caractérisé en ce que** le composant de cadre (5) présente une structure stratifiée constituée de deux tôles de cadre métalliques (10, 11) entre lesquelles se situe une partie de cadre en matière synthétique (12), le composant de cadre (5) comprenant deux longerons (6) s'étendant de manière au moins sensiblement parallèle et espacée l'un par rapport à l'autre et deux traverses (7) s'étendant de manière au moins sensiblement parallèle et espacée l'une par rapport à l'autre, lesquels entourent conjointement l'ouverture (4), et les traverses (7) et longerons (6) adjacents étant réalisés respectivement séparément et étant fixés les uns aux autres directement ou au moyen de pièces de liaison appropriées, et seulement les longerons (6) ou seulement les traverses (7) ou les traverses (7) et les longerons (6) présentant la structure stratifiée.

2. Cadre de renfort selon la revendication précédente, **caractérisé en ce que** les tôles de cadre métalliques (10, 11) sont réalisées sous forme de tôles de cadre en acier.

3. Cadre de renfort selon l'une des revendications précédentes, **caractérisé en ce que** la partie de cadre en matière synthétique (12) est réalisée sous forme de composant de cadre polymère.

4. Cadre de renfort selon l'une des revendications précédentes, **caractérisé en ce que** les tôles de cadre métalliques (10, 11) présentent une hauteur de 0,1 mm à 0,4 mm, en particulier de 0,2 mm à 0,3 mm.

5. Cadre de renfort selon l'une des revendications précédentes, **caractérisé en ce que** la partie de cadre en matière synthétique (12) présente une hauteur d'au moins 0,2 mm, en particulier d'au moins 0,3 mm.

6. Cadre de renfort selon les revendications 4 et 5, **caractérisé en ce que** les tôles de cadre métalliques (10, 11) présentent une hauteur de 0,2 mm et le composant en matière synthétique présente une hauteur de 0,4 mm.

7. Cadre de renfort selon l'une des revendications précédentes, **caractérisé en ce que** les tôles de cadre métalliques (10, 11) sont reliées, en particulier collées, à la partie de cadre en matière synthétique (12) de manière rigide en cisaillement.

8. Cadre de renfort selon la revendication 1, **caractérisé en ce que**, dans le cas où seulement les longerons (6) présentent la structure stratifiée, les traverses (7) sont fabriquées à partir de tôle d'acier.

9. Élément de toit (1) pour un véhicule, comprenant une ouverture de toit (2) pour une fenêtre, un toit ouvrant coulissant, un toit ouvrant relevable ou un toit ouvrant relevable et coulissant, un cadre de renfort (3) étant associé à l'ouverture de toit (2), **caractérisé par** la réalisation du cadre de renfort (3) selon l'une des revendications 1 à 8.
